# EUROPEAN PATENT APPLICATION

(11) **EP 4 354 333 A1**
(43) Date of publication of application: **17.04.2024**
(21) Application number: 22200529.0
(22) Date of filing: 10.10.2022
(51) Int. Cl.: G06F 21/73, G06F 21/76, G06F 30/30

(54) **INTEGRATED CIRCUIT DEVICE AND METHOD FOR AUTHENTICATING THE HARDWARE DESIGN OF SUCH INTEGRATED CIRCUIT DEVICE**

(71) Applicant: Nagravision Sarl, 1033 Cheseaux-sur-Lausanne (CH)
(72) Inventor: PELLETIER, Hervé, 1033 CHESEAUX-SUR-LAUSANNE (CH)
(74) Representative: Ipside

(57) **Abstract**

An integrated circuit device (100) is proposed. Such integrated circuit device comprises one or more specific block of logic gates (110) configured for generating deterministic internal state value changes inducing current leakages with corresponding deterministic variations in the integrated circuit device.

## Description

### 1. FIELD OF THE DISCLOSURE

The field of the disclosure is that of the manufacture of electronic integrated circuits.

More specifically, the disclosure relates to a technique for authenticating the hardware design of such integrated circuits.

The disclosure can be of interest e.g. in the field of semiconductor manufacturing.

### 2. TECHNOLOGICAL BACKGROUND

The expensive cost of semiconductor fabrication process explains the reduction of the number of companies with their own production plants. Today only four or five world global semiconductor manufacturers continue to exist. More and more semiconductor companies are fabless and entrust, for the fabrication, these manufacturer companies.

In this case it becomes difficult to know if the chip design will be modified intentionally (or not) by the manufacturer, e.g. by direct modification of the hardware design (e.g. layout modification) or by integration of a proprietary hardware block without authorization. Current ways to check the integrity of the circuit, such as cartography of all interconnections and transistor and gate positions, are complex, expensive and time consuming.

There is thus a need for a technique that allows authenticating the hardware design of an integrated circuit device.

### 3. SUMMARY

A particular aspect of the present disclosure relates to an integrated circuit device comprising at least one specific block of logic gates, hereafter SBLG, configured for generating deterministic internal state value changes inducing current leakages with corresponding deterministic variations in the integrated circuit device.

Thus, the present disclosure proposes a new and inventive solution for allowing authenticating the hardware design of an integrated circuit device.

More particularly, the generation of deterministic internal state value changes inducing current leakages with corresponding deterministic variations allows the detection of the presence of a given SBLG in the integrated circuit through the sensing of the electromagnetic, hereafter EM, field radiated by the signal propagation through the gates. For instance, a difference between the effective position of the given SBLG and its expected position may be representative e.g. of a modification of the hardware design (e.g. a modification of the layout or a modification of the netlist itself) of the integrated circuit or of an unauthorized integration, in the integrated circuit device, of a proprietary hardware block incorporating the SBLG.

In some embodiments, said at least one SBLG comprises a non-linear logical function.

Indeed, such non-linearity increases the number of internal state value changes and therefore the detectability of the SBLG(s) through the sensing of the induced current leakage. The non-linear behavior also increases the confidentiality of the SBLG(s) as it is more difficult to perform reverse engineering for identifying a non-linear logical function than a linear function.

In some embodiments, said at least one SBLG comprises a feedback loop from an output of a given logical function toward an input of the given logical function.

We thus get a period of transitions of the internal state of the SBLG(s) that is a function of the processing time of the given logical function. Such feedback induces a frequency response in the spectrum of the induced leakage current (and thus in the spectrum of the corresponding radiated EM field) at a frequency function of the inverse of the processing time of the given logical function. This allows simplifying the detection of SBLG(s) implemented in the integrated circuit device (e.g. for checking that a probe is well positioned above a SBLG, or to check that a given SBLG is indeed present on an integrated circuit that we suspect to be a counterfeit).

In some embodiments wherein said at least one SBLG comprises a feedback loop from an output of a given logical function toward an input of the given logical function, the given logical function is a non-linear logical function.

In some embodiments, the integrated circuit device comprises a plurality of SBLGs implemented at predetermined locations in the integrated circuit device.

Another particular aspect of the present disclosure relates to a method for authenticating the hardware design of an integrated circuit device according to the present disclosure (in any of the embodiments discussed above). According to such method, an electronic device executes, for at least one SBLG:
- sending a command to an electromagnetic, hereafter EM, probe for having the probe positioned at a given position above a surface of the integrated circuit device for sensing the EM field at the given position;
- receiving from the EM probe a measurement signal representative of the EM field at the given position;
- performing a correlation between the measurement signal and a model signal representative of the deterministic internal state value changes in the SBLG delivering a correlation signal; and
- when at least one correlation peak is detected in the correlation signal, performing a first comparison between, on one hand, the given position of the probe and, on the other hand, an expected position of the SBLG in the integrated circuit device, a difference between the given position of the probe and the expected position of the SBLG in the integrated circuit device being representative of a hardware modification of the integrated circuit device or of an unauthorized integration, in the integrated circuit device, of a proprietary hardware block incorporating the SBLG.

Thus, the SBLG(s) implemented in the integrated circuit can be identified through the detection of the waveform of the EM field radiated by the leakage current in the integrated circuit. Indeed, the variations of such waveform is representative of the variations of the leakage current which is in turn representative of the deterministic internal state value changes of the SBLG(s). Consequently, a non-detection of an expected SBLG at a given location in the integrated circuit, or a modification in the expected (relative) location of a given SBLG (in comparison with positions of others SBLG(s)), can be interpreted as representative of a hardware modification of the integrated circuit device or of an unauthorized integration, in the integrated circuit device, of a proprietary hardware block incorporating the SBLG.

In some embodiments, the electronic device executes, for said at least one SBLG: sending a trigger command to the integrated circuit device for having the SBLG to generate the deterministic internal state value changes inducing current leakages with corresponding deterministic variations in the integrated circuit device. When said at least one correlation peak is detected in the correlation signal, performing a second comparison, in addition to said performing a first comparison or in place of said performing a first comparison, between, on one hand, an expected propagation duration of the trigger command up to the SBLG and, on the other hand, time information representative of a time duration between an instant of execution of said sending the trigger command and the correlation peak, a difference between the expected propagation duration and the time information being representative of a hardware modification of the integrated circuit device or of an unauthorized integration, in the integrated circuit device, of a proprietary hardware block incorporating the SBLG.

Thus, a hardware modification of the integrated circuit device can be detected through the time information representative of the time duration between the instant of execution of the sending of the trigger command and the correlation peak. Such timing information can be used in combination of the position of the probe when a correlation peak is detected, or in place of the position of the probe, for deciding that a hardware modification has been performed on the integrated circuit device.

In some embodiments, said sending a trigger command to the integrated circuit device comprises sending a seed value for setting the internal state of the SBLG to an initial value.

In some embodiments wherein said at least one SBLG comprises a logical function, the model signal is a function of a binary word resulting of an XOR logical function taking as arguments an input binary word of the logical function and an output binary word of the logical function.

The binary word resulting of the XOR logical function is representative of the number of bits that are different between the input binary word of the logical function and the output binary word of the logical function and it is called hamming distance function. The model signal is thus a function of a binary word representative of a number of changes of the internal state of the SBLG.

In some embodiments, the function of the binary word comprises a Hamming weight of the binary word.

Thus, having that the binary word resulting of the XOR logical function is representative of the number of bits that are different between the input binary word of the logical function and an output binary word of the logical function, the Hamming weight delivers a value representative of a number of logical "true" bits in such resulting binary word. Such value is thus representative of a number of changes of the internal state of the SBLG.

In some embodiments wherein said at least one SBLG comprises a feedback loop from an output of a given logical function toward an input of the given logical function, the electronic device executes, for said at least one SBLG: performing a spectral analysis of the measurement signal delivering a frequency domain representation of the measurement signal. Said performing a correlation, said performing a first comparison and/or said performing a second comparison are executed when a frequency response is detected at a predetermined frequency in the frequency domain representation of the measurement signal.

For instance, the predetermined frequency is a function of the inverse of the processing time of the loop back logical function implemented in the feedback loop of the SBLG. The detection of the presence of the SBLG is thus simplified. This allows e.g. verifying that the probe is well positioned above the SBLG before performing the correlation.

Another aspect of the present disclosure relates to a computer program product comprising program code instructions for implementing the above-mentioned method for authenticating the hardware design of an integrated circuit device (in any of the different embodiments discussed above), when said program is executed on a computer or a processor.

Another aspect of the present disclosure relates to an electronic device configured for implementing all or part of the steps of the above-mentioned method for authenticating the hardware design of an integrated circuit device (in any of the different embodiments discussed above). Thus, the features and advantages of this device are the same as those of the corresponding steps of said method. Therefore, they are not detailed any further.

### 4. LIST OF FIGURES

Other features and advantages of embodiments shall appear from the following description, given by way of indicative and non-exhaustive examples and from the appended drawings, of which:
- Figure 1 illustrates a probe sensing the EM field radiated by leakage currents in an integrated circuit device according to one embodiment of the present disclosure;
- Figure 2 illustrates an example of the structural blocks of an electronic device allowing all or part of the steps of the method for authenticating the hardware design of the integrated circuit device of Figure 1 to be executed according to one embodiment of the present disclosure;
- Figure 3 illustrates the steps of a method for authenticating the hardware design of the integrated circuit device of Figure 1 according to one embodiment of the present disclosure; and
- Figure 3a illustrates the steps of the method for authenticating the hardware design of the integrated circuit device of Figure 1 according to another embodiment of the present disclosure.

### 5. DETAILED DESCRIPTION

In all of the Figures of the present document, the same numerical reference signs designate similar elements and steps.

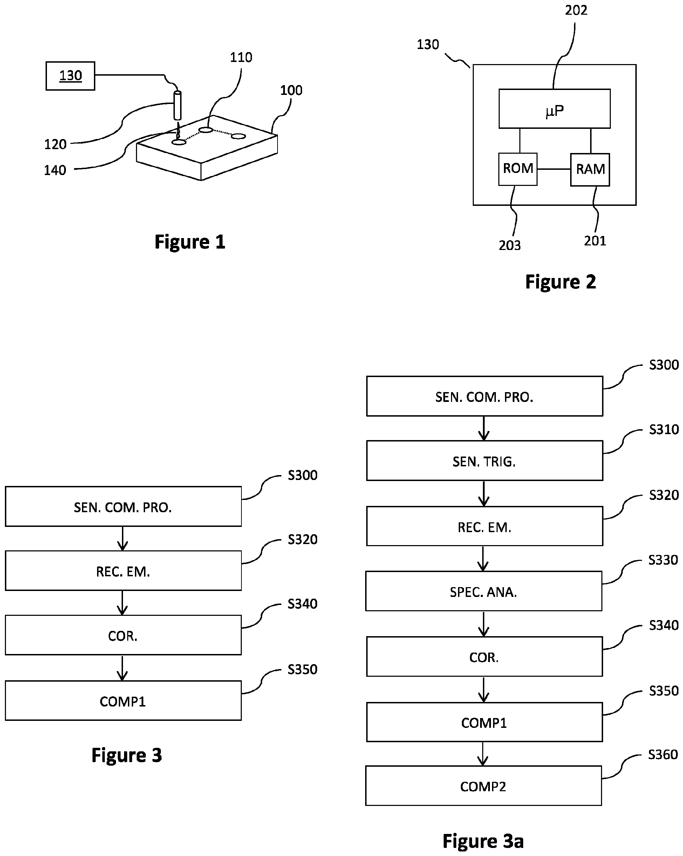

Referring now to **Figure 1****,** we describe an EM probe 120 sensing the EM field 140 radiated by leakage currents in an electronic integrated circuit device 100 according to one embodiment of the present disclosure.

More particularly, the integrated circuit device 100 (also referred to as an IC device, a chip, or a microchip) comprises a plurality of SBLGs 110. Such SBLG 110 is configured for generating deterministic internal state value changes inducing current leakages with corresponding deterministic variations in the integrated circuit device 100. Such deterministic internal state value changes result e.g. of the activation of specific logic functions as discussed below. The resulting deterministic variations allow the detection of the presence of the SBLGs 110 in the integrated circuit device 100 through the sensing of the EM field 140 radiated by the signal propagation through the gates and thus through the current leakages.

Indeed, such SBLG 110 can be duplicated and can be automatically/manually positioned in the integrated circuit device 100 according to rules (delay requirements...) used by the place and route design tool. With the place/route tools the designer knows the relative position of each SBLG 110 in the integrated circuit device 100. For instance, a plurality of SBLGs 110 is implemented at predetermined locations in the integrated circuit device 100. Thus, a difference between the effective position of a given SBLG 110, as estimated through the sensing of the EM field 140 radiated by the current leakages, and its expected position may be representative of a modification of the hardware design (e.g. a modification of the layout or a modification of the netlist itself) of the integrated circuit or of an unauthorized integration, in the integrated circuit device 100, of a proprietary hardware block which incorporates SBLGs 110.

However, in some embodiments, the integrated circuit device 100 comprises only one SBLG 110. Indeed, it can be sufficient to detect a difference between the effective position of a given SBLG 110 in the integrated circuit device 100, and its expected position for deciding e.g. that a modification of the hardware design (e.g. a modification of the layout or a modification of the netlist itself) of the integrated circuit occurred.

Back to Figure 1, the EM field 140 is sensed by the probe 120. Such EM probe 120 is in charge of the measurement of the EM field 140 radiated by the integrated circuit device 100. Today, an EM probe dedicated to the sensing of integrated circuits can collect an EM signal with an accuracy of about 20µm in terms of position above the integrated circuit being sensed and an accuracy in terms of timing in the capture of the waveform of the EM signal of about Ins.

In some embodiments, all or part of the SBLG(s) 110 implemented in the integrated circuit device 100 comprise a non-linear logical function.

Indeed, such non-linearity increases the number of internal state value changes and therefore the detectability of the SBLG(s) 110 through the sensing of the induced current leakage. The non-linear behavior also increases the confidentiality of the SBLG(s) 110 as it is more difficult to perform reverse engineering for identifying a non-linear logical function than a linear function. In some embodiments, the non-linear logical function is achieved with a lookup table (like for example the AES lookup table (SBox)) or with any other cryptographic functions. In some embodiments, the non-linear logical hardware implementation is done with lines structures to reduce parasitic leakage.

In some embodiments, all or part of the SBLG(s) 110 implemented in the integrated circuit device 100 comprise a feedback loop from an output of a given logical function toward an input of the given logical function.

Thus, the given logical function takes as an input data the output binary word previously delivered by the given logical function. We thus get a period of transitions of the internal state of the SBLG(s) 110 that is a function of the processing time of the given logical function. Such feedback induces a frequency response in the spectrum of the induced leakage current (and thus in the spectrum of the corresponding radiated EM field 140) at a frequency function of the inverse of the processing time of the given logical function. This allows simplifying the detection of SBLG(s) 110 implemented in the integrated circuit device 100 as discussed more deeply below in relation with Figure 3 and Figure 3a (e.g. for checking that the probe 120 is well positioned above a given SBLG 110, or to check that a given SBLG 110 is indeed present on the integrated circuit 100).

Back to Figure 1, In some embodiments, the given logical function, that takes as an input data the output binary word previously delivered by the given logical function, is the non-linear logical function according to any of the embodiments discussed above.

In order to be able to implement all or part of the steps of the method for authenticating the hardware design of the integrated circuit device 100 in the various embodiments disclosed below in relationship with Figure 3 and Figure 3a, in some embodiments the electronic device 130 comprises **(****Figure 2****):**
- a non-volatile memory 203 (e.g. a read-only memory (ROM), a hard disk, a flash memory, etc.);
- a volatile memory 201 (e.g. a random-access memory or RAM) and a processor 202.

The non-volatile memory 203 is a non-transitory computer-readable carrier medium. It stores executable program code instructions, which are executed by the processor 202 in order to enable implementation of some steps of the method described below (method for authenticating the hardware design of the integrated circuit device 100) in the various embodiments disclosed in relationship with Figure 3 and Figure 3a.

Upon initialization, the aforementioned program code instructions are transferred from the non-volatile memory 203 to the volatile memory 201 so as to be executed by the processor 202. The volatile memory 201 likewise includes registers for storing the variables and parameters required for this execution.

The steps of the method for authenticating the hardware design of the integrated circuit device 100 may be implemented equally well:
- by the execution of a set of program code instructions executed by a reprogrammable computing machine such as a PC type apparatus, a DSP (digital signal processor) or a microcontroller. This program code instructions can be stored in a non-transitory computer-readable carrier medium that is detachable (for example a CD-ROM, a DVD-ROM, a USB key) or non-detachable; or
- by a dedicated machine or component, such as an FPGA (Field Programmable Gate Array), an ASIC (Application-Specific Integrated Circuit) or any dedicated hardware component.

In other words, the disclosure is not limited to a purely software-based implementation, in the form of computer program instructions, but that it may also be implemented in hardware form or any form combining a hardware portion and a software portion.

Referring now to **Figure 3****,** we describe a method for authenticating the hardware design of the integrated circuit device 100 according to one embodiment of the present disclosure.

More particularly, in a **step S300,** the electronic device 130 sends a command to the EM probe 120 for having the probe 120 positioned at a given position above a surface of the integrated circuit device 100 for sensing the EM field 140 at the given position.

In a **step S320,** the electronic device 130 receives, from the EM probe 120, a measurement signal representative of the EM field 140 at the given position. In that respect, in some embodiments, during step S320, the electronic device starts the integrated circuit 130, e.g. turns ON the power supply of the integrated circuit 130 for having the SBLG(s) starting to generate deterministic internal state value changes. Such SBLG(s) is(are) e.g. configured for having its internal state that takes a default initial internal state (e.g. a reset internal state value) for having the internal state value changes that are deterministic.

In a **step S340,** the electronic device 130 performs a correlation between the measurement signal and a model signal representative of the deterministic internal state value changes in one SBLG 110 delivering a correlation signal.

More particularly, such model signal results of a mathematical model representative of the deterministic internal state value changes in the SBLG 110, e.g. a model of the embedded logic functions implemented in the SBLG 110.

For instance, in some embodiments wherein the SBLG 110 comprises at least one logical function (whether a linear or a non-linear logical function as discussed above in relation with Figure 1), the model signal is a function of a binary word resulting of an XOR logical function taking as arguments an input binary word of said logical function and an output binary word of said logical function. Indeed, the binary word resulting of the XOR logical function is representative of the number of bits that are different between the input binary word of the logical function and the output binary word of the logical function and it is called hamming distance function. The model signal is thus a function of a binary word representative of a number of changes of the internal state of the SBLG 110.

In some embodiments, the function of the binary word resulting of the XOR logical function comprises a Hamming weight of the binary word. Indeed, having that the binary word resulting of the XOR logical function is representative of the number of bits that are different between the input binary word of the logical function and an output binary word of the logical function, the Hamming weight delivers a value representative of a number of logical "true" bits in such resulting binary word. Such value is thus representative of a number of changes of the internal state of the SBLG 110.

When a plurality of SBLGs 110 are implemented in the integrated circuit device 100, all or part of the SBLG(s) 110 may implement different deterministic internal state value changes, e.g. different embedded logic functions. In such embodiments, all or part of the model signals associated to the SBLG 110 expected to be implemented in the integrated circuit device 100 are tested through different correlations during the step S340. This allows testing the presence of different SBLGs 110 at the given position. However, in other embodiments, this is the model signal of the SBLG 110 expected to be implemented at the given position in the integrated circuit device 100 that is used to perform the correlation during the step S340.

Back to Figure 3, when one correlation peak is detected in the correlation signal delivered during the execution of step S340, during a **step S350,** the electronic device 130 performs a first comparison between, on one hand, the given position of the EM probe 120 and, on the other hand, an expected position of the SBLG 110 (i.e. the SBLG 110 with the deterministic internal state value changes corresponding to the model signal used for performing the correlation in step S340) in the integrated circuit device 100. More particularly, a difference between the given position of the probe 120 and the expected position of the SBLG 110 in the integrated circuit device 100 is representative of a hardware modification of the integrated circuit device 100 or of an unauthorized integration, in the integrated circuit device 100, of a proprietary hardware block which incorporates SBLG(s) 110. For instance, it can be decided that the integrated circuit device 100 has been modified when the difference between the given position of the probe 120 and the expected position of the SBLG 110 in the integrated circuit device 100 is greater than a predetermined threshold.

The expected position of the SBLG 110 in the integrated circuit device 100 can be whether defined relative to the overall integrated circuit device 100, or relative, when existing, to the other SBLG 110 implemented in the integrated circuit device 100.

When a plurality of correlation peaks is detected in the correlation signal, the first comparison can be performed for the different peaks of the plurality.

Thus, such SBLG 110 implemented in the integrated circuit 100 can be identified through the detection of the waveform of the EM field 140 radiated by the leakage current in the integrated circuit 100. Indeed, the variations of such waveform is representative of the variations of the leakage current which is in turn representative of the deterministic internal state value changes of the SBLG 110. Consequently, a non-detection of an expected SBLG 110 at a given location in the integrated circuit, or a modification in the expected (relative) location of a given SBLG 110 (in comparison with positions of others SBLG 110), can be interpreted as representative of a hardware modification of the integrated circuit device 100 or of an unauthorized integration, in the integrated circuit device 100, of a proprietary hardware block which incorporates SBLG(s) 110.

Referring now to **Figure 3a****,** we describe the method for authenticating the hardware design of the integrated circuit device 100 according to another embodiment of the present disclosure.

More particularly, the embodiment of Figure 3a comprises the steps of the embodiment of Figure 3 (in any of the embodiments discussed above). in addition to those steps, the embodiment of Figure 3a comprises a **step S310** wherein the electronic device 130 sends a trigger command to the integrated circuit device 100 for having the SBLG 110 (i.e. the SBLG 110 with the deterministic internal state value changes corresponding to the model signal used for performing the correlation in step S340) to generate the deterministic internal state value changes inducing current leakages with corresponding deterministic variations in the integrated circuit device 100. Such step S310 takes place before the step S320 discussed above so that the measurement signal received from the EM probe 120 is also representative of the trigger command, i.e. the start of the expected deterministic variations of the waveform of the measurement signal is related to the trigger command. Consequently, in such embodiment, when one correlation peak is detected in the correlation signal delivered during the execution of step S340, during a **step S360,** the electronic device 130 performs a second comparison between, on one hand, an expected propagation duration of the trigger command up to the SBLG 110 and, on the other hand, time information representative of a time duration between an instant of execution of the sending the trigger command (step S310) and the correlation peak. A difference between the expected propagation duration and the time information is representative of a hardware modification of the integrated circuit device 100 or of an unauthorized integration, in the integrated circuit device 100, of a proprietary hardware block which incorporates SBLG(s) 110. For instance, it can be decided that the integrated circuit device 100 has been modified when the difference between the expected propagation duration and the time information is greater than a predetermined threshold. When a plurality of correlation peaks is detected in the correlation signal, the second comparison can be performed for the different peaks of the plurality.

In some embodiments, the second comparison is performed in addition to the first comparison. In such cases, the authentication of the hardware design of the integrated circuit device 100 relies both on:
- the detection of a difference between the given position of the probe 120 and the expected position of the SBLG 110 in the integrated circuit device 100; and
- the detection of a difference between the expected propagation duration and the time information.

However, in other embodiments, the second comparison is performed in place of the first comparison (e.g. the step S350 is not executed). In such embodiments, the authentication of the hardware design of the integrated circuit device 100 relies only on the detection of a difference between the expected propagation duration and the time information.

Alternatively, in some embodiments, the steps S310 and S360 are not executed (e.g. as in the embodiment of Figure 3) and the authentication of the hardware design of the integrated circuit device 100 relies only on the detection of a difference between the given position of the probe 120 and the expected position of the SBLG 110 in the integrated circuit device 100 during the execution of the step S350.

In some embodiments, during the step S310 the electronic device 130 sends a seed value for setting the internal state of the SBLG 110 to an initial value. This allows having different deterministic internal state value changes patterns for a given SBLG 110. However, in some embodiments as in the embodiment of Figure 3a, during step S310, the electronic device 130 does not send a seed value, e.g. when the SBLG(s) is(are) configured for having its internal state that takes a default initial internal state (e.g. a reset internal state value) at power ON as discussed above in relation with Figure 3.

Back to Figure 3a, when the SBLG 110 (i.e. the SBLG 110 with the deterministic internal state value changes corresponding to the model signal used for performing the correlation in step S340) comprises a feedback loop from an output of a given logical function toward an input of said given logical function (whether a linear or a non-linear logical function as discussed above in relation with Figure 1), in a **step S330,** the electronic device 130 performs a spectral analysis of the measurement signal (received during the execution of step S320) delivering a frequency domain representation of the measurement signal. In such embodiments, the step S340 (step of performing a correlation), the step S350 (step of performing a first comparison), and/or the step S360 (step of performing a second comparison) are executed when a frequency response is detected at a predetermined frequency in the frequency domain representation of the measurement signal.

For instance, the predetermined frequency is a function of the inverse of the processing time of the loop back logical function implemented in the feedback loop of the SBLG 110. The detection of the presence of the SBLG 110 is thus simplified through the implementation of such spectral analysis (e.g. a Fourier transform of the measurement signal). This allows e.g. verifying that the probe 120 is well positioned above the SBLG 110 before performing the correlation during the execution of the step S340. However, in some embodiments (e.g. as in the embodiment of Figure 3), the step S330 is not executed and the correlation is directly performed during the execution of the step S340.

## Claims

1. Integrated circuit device (100) **characterized in that** it comprises at least one specific block of logic gates (110), hereafter SBLG, configured for generating deterministic internal state value changes inducing current leakages with corresponding deterministic variations in said integrated circuit device.

2. Integrated circuit device according to claim 1, wherein said at least one SBLG comprises a non-linear logical function.

3. Integrated circuit device according to claim 1 or 2, wherein said at least one SBLG comprises a feedback loop from an output of a given logical function toward an input of said given logical function.

4. Integrated circuit device according to claim 3 in that it depends on claim 2, wherein said given logical function is said non-linear logical function.

5. Integrated circuit device according to any of the claims 1 to 4, comprising a plurality of SBLGs implemented at predetermined locations in the integrated circuit device.

6. Method for authenticating the hardware design of an integrated circuit device (100) according to any of the claims 1 to 5,
**characterized in that** an electronic device (130) executes, for at least one SBLG (110):
- **sending** (S300) a command to an electromagnetic, hereafter EM, probe (120) for having the probe positioned at a given position above a surface of the integrated circuit device for sensing the EM field (140) at the given position;
- **receiving** (S320) from the EM probe a measurement signal representative of the EM field at the given position;
- **performing** (S340) a correlation between the measurement signal and a model signal representative of the deterministic internal state value changes in the SBLG delivering a correlation signal; and
- when at least one correlation peak is detected in said correlation signal, **performing a first comparison** (S350) between, on one hand, the given position of the probe and, on the other hand, an expected position of the SBLG in the integrated circuit device, a difference between the given position of the probe and the expected position of the SBLG in the integrated circuit device being representative of a hardware modification of the integrated circuit device or of an unauthorized integration, in the integrated circuit device, of a proprietary hardware block incorporating the SBLG.

7. Method according to claim 6, wherein the electronic device executes, for said at least one SBLG:
- **sending** (S310) a trigger command to the integrated circuit device for having the SBLG to generate the deterministic internal state value changes inducing current leakages with corresponding deterministic variations in said integrated circuit device,
wherein when said at least one correlation peak is detected in said correlation signal, **performing a second comparison** (S360), in addition to said performing a first comparison or in place of said performing a first comparison, between, on one hand, an expected propagation duration of the trigger command up to the SBLG and, on the other hand, time information representative of a time duration between an instant of execution of said sending the trigger command and the correlation peak, a difference between the expected propagation duration and the time information being representative of a hardware modification of the integrated circuit device or of an unauthorized integration, in the integrated circuit device, of a proprietary hardware block incorporating the SBLG.

8. Method according to claim 7, wherein said sending a trigger command to the integrated circuit device comprises sending a seed value for setting the internal state of the SBLG to an initial value.

9. Method according to any of the claims 6 to 8, wherein said integrated circuit device is according to any of the claims 2 to 5,
and wherein said model signal is a function of a binary word resulting of an XOR logical function taking as arguments an input binary word of said logical function and an output binary word of said logical function.

10. Method according to claim 9, wherein said function of said binary word comprises a Hamming weight of said binary word.

11. Method according to any of the claims 6 to 10, wherein said integrated circuit device is according to claim 3 or according to any of the claims 4 to 5 in that it depends on claim 3, wherein the electronic device executes, for said at least one SBLG:
- **performing a spectral analysis** (S330) of said measurement signal delivering a frequency domain representation of said measurement signal,
said performing a correlation, said performing a first comparison and/or said performing a second comparison being executed when a frequency response is detected at a predetermined frequency in said frequency domain representation of said measurement signal.

12. Computer program product **characterized in that** it comprises program code instructions for implementing a method according to any of the claims 6 to 11.

13. Electronic device (130) for authenticating the hardware design of an integrated circuit device (100) according to any of the claims 1 to 5,
**characterized in that** it comprises a processor (202) or a dedicated computing machine configured for:
- **sending** a command to an electromagnetic, hereafter EM, probe for having the probe positioned at a given position above a surface of the integrated circuit device for sensing the EM field at the given position;
- **receiving** from the EM probe a measurement signal representative of the EM field at the given position;
- **performing** a correlation between the measurement signal and a model signal representative of the deterministic internal state value changes in the SBLG delivering a correlation signal; and
- when at least one correlation peak is detected in said correlation signal, **performing a first comparison** between, on one hand, the given position of the probe and, on the other hand, an expected position of the SBLG in the integrated circuit device, a difference between the given position of the probe and the expected position of the SBLG in the integrated circuit device being representative of a hardware modification of the integrated circuit device or of an unauthorized integration, in the integrated circuit device, of a proprietary hardware block incorporating the SBLG.
